Europäisches Patentamt

European Patent Office

Office européen des brevets

(11) Numéro de publication : **0 296 901 B1**

(12) **FASCICULE DE BREVET EUROPEEN**

(45) Date de publication du fascicule du brevet :
**11.09.91 Bulletin 91/37**

(51) Int. Cl.⁵ : **B60R 13/06**

(21) Numéro de dépôt : **88401232.9**

(22) Date de dépôt : **20.05.88**

(54) Joint d' étanchéité entre un bâti support et un panneau mobile.

(30) Priorité : 05.06.87 FR 8707948
16.07.87 FR 8710073

(43) Date de publication de la demande :
28.12.88 Bulletin 88/52

(45) Mention de la délivrance du brevet :
11.09.91 Bulletin 91/37

(84) Etats contractants désignés :
AT BE CH DE ES GB GR IT LI LU NL SE

(56) Documents cités :
EP-A- 0 241 264
DE-A- 1 812 484
FR-A- 2 467 960
FR-A- 2 492 939
FR-A- 2 580 999

(73) Titulaire : **STANDARD PRODUCTS ATLANTIC**
**Société anonyme**
**105 Boulevard de Verdun**
**F-92400 Courbevoie (FR)**

(72) Inventeur : **Paris, Roland**
**L'Olonnière**
**F-35500 Erbrée (FR)**

(74) Mandataire : **Portal, Gérard et al**
**Cabinet Beau de Loménie 55, rue**
**d'Amsterdam**
**F-75008 Paris (FR)**

**Description**

La présente invention concerne un joint d'étanchéité entre un bâti support et un panneau mobile (du type divulgué, par exemple, par FR-A-2492939 ou DE-A-1812484).

Il existe de nombreux dispositifs permettant d'assurer l'étanchéité entre un bâti et un panneau mobile venant s'appuyer en position de fermeture sur ledit bâti.

Le FR 2580999 (RENAULT) décrit un dispositif de guidage de vitre descendante de porte de véhicule automobile comprenant une garniture d'étanchéité tubulaire mais cette dernière n'est pas montée de façon pivotante sur l'élément formant liaison avec l'élément d'ancrage sur la carrosserie. Cette configuration ne permet pas d'obtenir à la fois une bonne étanchéité et un amortissement correct du panneau mobile de la porte sur la garniture.

Le document interférent EP-A-0241264 (BRIDGESTONE), publié le 14-10-87, décrit un dispositif de guidage de vitre comprenant un profilé en S avec un élément d'ancrage sur la carrosserie et un élément de guidage et d'étanchéité du bord latéral ou supérieur de ladite vitre.

Cependant, ce dispositif ne comporte aucun élément d'étanchéité destiné à recevoir un panneau mobile en contact d'appui.

Le FR-A-2492939 (COMIND S.p.A.) décrit une garniture tubulaire, en particulier pour l'encadrement de portières, capots ou parties ouvrantes de véhicules automobiles, comprenant un renflement ou bulbe et un canal en matériaux élastomères coextrudés, caractérisée par le fait que lesdits bulbe et canal sont mutuellement reliés par une partie restreinte ou limitée de leur étendue sensiblement située à l'emplacement de l'extrémité d'une branche dudit canal de façon que bulbe et canal puissent prendre des positions angulaires mutuelles comprises entre zéro et au moins 160°.

Le bulbe a de préférence un profil tubulaire tandis que le canal est conformé en U mais le pivotement de l'élément tubulaire s'accompagne d'une flexion de la partie restreinte formant élément de liaison.

Il en est de même dans le DE-A-1812484 (SAIAG) qui décrit un dispositif similaire au précédent.

Par ailleurs, dans les deux précédents documents, la partie formant la liaison entre la partie de fixation et la partie tubulaine est très courte par rapport au diamètre de la section tubulaire.

Le GB-A-717890 (CHALIK) précise que l'élément d'étanchéité en forme de baguette relié à la bande de fixation par un élément de liaison, vient au contact de ladite bande de fixation lors de l'opération de fermeture. On a donc à ce moment là une déformation de l'élément de liaison.

Dans le EP-A-0102556 (NISSAN) et le Patent Abstracts of Japan, Vol. 7, no 287 (M-264), (1432), 21 décembre 1983, qui décrivent ; des dispositifs similaires aux précédents, on a toujours une déformation élastique de l'élément de liaison pendant l'opération de fermeture du panneau mobile bien que lesdits éléments de liaison soient plus longs.

Dans le pivotement ou le basculement de l'élément d'étanchéitié par rapport à l'élément d'accrochage, l'élément de liaison se déforme et cette déformation constitue un facteur d'usure du matériau qui peut provoquer une rupture ultérieure.

Par ailleurs, avec ces dispositifs, l'étanchéité n'est assurée, en position de fermeture, que par le contact d'appui entre la surface de l'élément d'étanchéité et la surface du panneau mobile, ce qui nécessite une forte pression entre lesdites surfaces.

L'invention a pour but de résoudre le nouveau problème technique consistant à trouver une solution permettant d'obtenir une étanchéité parfaite avec une faible pression du panneau mobile sur le bâti support.

L'invention résoud ce problème technique pour la première fois de manière satisfaisante en proposant un joint d'étanchéité entre un bâti support comportant un bord de fixation et un panneau mobile tel que défini dans la revendication 1.

Un mode de réalisation de l'invention réside dans l'élément d'étanchéité qui est constitué d'une pièce tubulaire ou multitubulaire déformable réalisée avec un matériau de résistance mécanique différente de celle de l'élément de liaison.

Encore un autre mode de réalisation de l'invention est de réaliser l'élément de liaison en un matériau élastomère compact ou dense tandis que la pièce tubulaire ou multitubulaire est réalisée en un matériau élastomère spongieux notamment en basse densité.

Un autre mode de réalisation de l'invention réside dans l'élément de liaison réalisé avec un matériau de densité supérieure à 1 et de préférence comprise et de préférence entre 1 et 1,3 avec un éthylène propylène diène monomère (EPDM).

Un autre mode de réalisation de l'invention réside dans le fait que l'axe 7 est situé de l'autre côté du plan médian vertical de la pièce 3 par rapport au point de contact du panneau mobile 6.

Ainsi selon un aspect de l'invention, l'élément de liaison est rigidifié soit au moyen d'une armature, soit en le réalisant directement avec un matériau de grande rigidité, pour permettre au joint de rester dans sa position d'étanchéité sans le soutien de la feuillure du bâti support.

L'invention sera mieux comprise à la lecture de la description qui va suivre accompagnée des dessins annexés sur lesquels :

Les figures 1, 2 et 3 représentent des vues en coupe du joint d'étanchéité selon l'invention pendant les différentes phases de la fermeture du panneau mobile.

La figure 4 représente le joint de l'invention monté sur un bâti support ne possédant pas de feuillure.

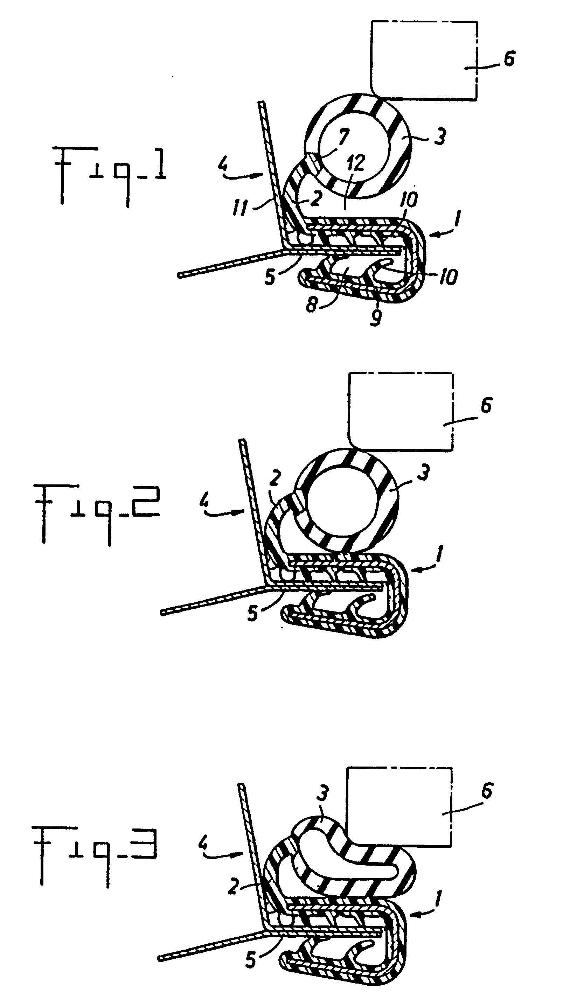

Sur la figure 1, l'élément d'ancrage 1 présente une section transversale en forme de U délimitant intérieurement une rainure 8 dans laquelle est engagé le bord de fixation 5 du bâti support 4. La rainure 8 comporte une armature intégrée 9 et des lèvres d'accrochage 10 sur sa face interne.

Selon un autre mode de réalisation de l'invention, l'élément d'ancrage est constitué par une semelle collée ou clipsée sur le bâti support.

L'élément d'ancrage 1 se prolonge par un élément de liaison 2 présentant une forme incurvée de courbure inverse à celle de la rainure 8.

L'élément de liaison 2 est relié à un élément d'étanchéité suivant l'une de ses génératrices.

La longueur de l'élément de liaison 2 est telle qu'elle permet un débattement de l'élément d'étanchéité 3. Ce débattement s'effectue dans l'espace libre 12 situé en position d'ouverture du joint (telle que représentée figure 1) entre le flanc externe de la rainure 8 de l'élément d'ancrage 1 et la face inférieure de l'élément d'étanchéité 3.

L'élément d'étanchéité est constitué d'une pièce tubulaire ou multitubulaire 3, réalisée en un matériau élastique déformable d'une seule pièce avec les éléments de liaison 2 et d'ancrage 1 ou sous forme de pièce rapportée puis collée ou soudée sur l'élément de liaison 2. La pièce tubulaire ou multitubulaire 3 peut donc être réalisée en un matériau identique ou différent de celui qui est utilisé pour les autres parties du joint et de préférence en un matériau élastomère spongieux notamment de basse densité par exemple du caoutchouc type EPDM, caoutchouc thermoplastique (thermoplastic rubber TPR) PVC ou toutes autres matières plastiques.

La pièce tubulaire ou multitubulaire 3 est destinée à recevoir le panneau mobile 6 en contact d'appui lors de la fermeture. La pièce 3 est montée de façon pivotante sur la ligne d'articulation 7 avec ledit élément de liaison 2. La ligne ou d'articulation 7 correspond donc à la liaison entre l'élément 2 et la pièce 3 et constitue l'axe du pivotement.

La longueur de l'élément de liaison 2 est sensiblement égale au rayon de la section transversale de la pièce tubulaire ou multitubulaire 3, ceci pour éviter la déformation de l'élément 2 et permettre le débattement et le pivotement de la pièce 3 lors de la fermeture du panneau 6.

La déformation de la pièce 3 en fonction de l'importance de l'effort de fermeture, s'effectue donc après son pivotement et sa mise en contact avec l'un des flancs externes de la rainure 8 de l'élément d'ancrage 1, sans déformation de l'élément de liaison 2.

Sur la figure 1, le panneau mobile 6 vient au contact de la pièce 3.

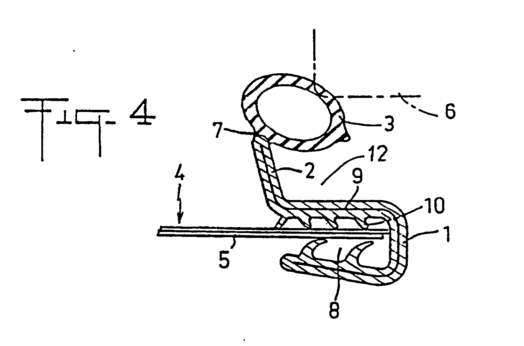

Sur la figure 2, la fermeture du panneau 6 se poursuit et la pièce 3 pivote autour de la ligne d'articulation 7 pour venir en contact du flanc externe de la rainure 8.

Selon un mode de réalisation avantageux, la ligne d'articulation 7 formant axe de pivotement 7 est positionné sur la pièce 3 relativement au point de contact avec le panneau mobile 6 de façon à permettre le débattement par pivotement ou basculement de ladite pièce 3 sans déformation sensible de cette dernière. Cela est réalisé de manière avantageuse lorsque l'axe 7 est situé de l'autre côté du plan médian vertical de la pièce 3 par rapport au point de contact du panneau mobile 6.

Sur la figure 3, la fermeture se termine et la pièce 3 se déforme sous l'action du panneau 6 en enveloppant le coin du panneau et en garantissant ainsi une étanchéité parfaite.

L'énergie nécessaire au pivotement de la pièce 3 est généralement inférieure à celle que nécessite les déformations de joints selon l'art antérieur.

Par ailleurs, une modification combinée de la longueur de l'élément de liaison et de la dimension et de l'épaisseur de la pièce 3 permet d'ajuster la position de la ligne d'articulation 7 qui est aussi axe de pivotement.

La tenue de l'élément de liaison 2 pendant le pivotement est assurée soit par le choix d'une épaisseur convenable ou d'un matériau rigide soit par une paroi latérale ou feuillure 11 sur le bâti support et, de façon générale, l'élément 2 a une forme incurvée dans le sens du pivotement vers l'élément d'ancrage 1.

L'élément de liaison est réalisé de préférence en un matériau élastomère compact ou dense dont la densité est supérieure à 1 et de préférence comprise entre 1 et 1,3, tel que par exemple un EPDM.

En certains endroits le bâti support ne possède pas de feuillure, ou bien la feuillure existante peut être de dimension insuffisante pour retenir l'élément de liaison sur toute sa longueur.

Par ailleurs, certains véhicules présentent des ouvertures de porte dont les rayons de courbure sont très faibles et la feuillure possède alors une inclinaison par rapport au bord de fixation de l'élément d'ancrage qui est plus forte que celle requise par l'élément de liaison pour assurer une position correcte de l'élément d'étanchéité.

Dans ces derniers cas, il faut donc soutenir l'élément de liaison par d'autres moyens.

On peut également être amené à ajuster l'inclinaison de l'élément de liaison rigidifié pour l'adapter au profil d'une feuillure et cet ajustement est généralement réalisé avant le montage du joint par une opération de formage mécanique.

Ainsi sur la figure 4 et comme sur les figures précédentes, l'élément d'ancrage 1 présente une section transversale en forme de U délimitant intérieurement une rainure 8 dans laquelle est engagé le bord de fixation 5 du bâti support 4. La rainure 8 comporte une armature intégrée 9 et des lèvres d'accrochage 10 sur sa face interne. L'élément d'ancrage se prolonge par un élément de liaison 2 raccordé à un élément d'étanchéité 3 soit directement, soit par l'intermédiaire d'un pontet.

L'élément d'étanchéité a une forme tubulaire ou multitubulaire creuse (ou pleine) et est réalisé en un matériau élastique déformable. Le joint constitué des éléments 1, 2, 3 est fabriqué directement par coextrusion ou par réunion et scellage des différentes parties.

L'élément d'étanchéité 3 est destiné à recevoir le panneau mobile 6 en contact d'appui lors de la fermeture. L'élément d'étanchéité 3 est monté de façon pivotante autour de la ligne d'articulation 7 avec ledit élément de liaison 2. La ligne d'articulation 7 correspond donc à la liaison entre l'élément 2 et l'élément d'étanchéité 3 est constitue l'axe du pivotement comme sur les figures précédentes.

Pendant le pivotement de l'élément d'étanchéité 3, l'élément de liaison 2 doit rester fixe et ne pas se déformer. Ceci peut être réalisé soit grâce au matériau constitutif de l'élément de liaison lui-même qui doit être alors très rigide, soit au moyen d'une armature interne 9 comme sur la figure 4.

Dans le mode de réalisation de l'invention, l'armature 9 est métallique et d'une seule pièce de l'élément d'ancrage 1 à l'élément de liaison 2 mais on peut concevoir des modes de réalisation dans lesquels il existe des armatures séparées faites en divers matériaux durs.

Ainsi en l'absence de feuillure ou en présence d'une feuillure dont la dimension ou l'inclinaison est insuffisante pour assurer le maintien de l'élément de liaison et le pivotement correct de l'élément d'étanchéité, on rigidifie ledit élément de liaison sur au moins une partie de sa longueur.

Si on le désire on peut également ajuster l'inclinaison de l'élément de liaison rigidifié pour l'adapter à divers profils de bâtis sans compromettre l'étanchéité du montage.

## Revendications

1. Joint d'étanchéité entre un bâti support (4) comportant un bord de fixation (5) et un panneau mobile (6) venant s'appuyer en position de fermeture sur le bâti (4), comprenant un élément d'ancrage (1) sur le bord (5), relié au moyen d'un élément de liaison (2) à un élément d'étanchéité (3) déformable destiné à recevoir le panneau mobile (6) en contact d'appui, caractérisé en ce que la longueur de l'élément de liaison (2) est telle qu'elle permet un débattement de l'élément d'étanchéité (3) dans l'espace libre (12) situé, en position d'ouverture du joint, entre le flanc externe de l'élément d'ancrage (1) sur le bord (5) et la face interne de l'élément d'étanchéité (3), ledit élément d'étanchéité (3) étant monté de façon pivotante sur ledit élément de liaison (2) autour d'un axe d'articulation (7), la fermeture du panneau mobile (6) provoquant le débattement par pivotement de l'élément d'étanchéité (3) sans déformation sensible de ce dernier.

2. Joint d'étanchéité selon la revendication 1, caractérisé en ce que l'élément d'étanchéité (3) est une pièce tubulaire ou multitubulaire.

3. Joint d'étanchéité selon la revendication 2, caractérisé en ce que la longueur de l'élément de liaison (2) est sensiblement égale au rayon de la section transversale de ladite pièce tubulaire ou multitubulaire (3).

4. Joint d'étanchéité selon l'une des revendications 2 ou 3, caractérisé en ce que ladite ligne d'articulation (7) est située sur une des génératrices de ladite pièce tubulaire ou multitubulaire (3) et constitue l'axe du pivotement.

5. Joint d'étanchéité selon la revendication 4, caractérisé en ce que ladite pièce tubulaire ou multitubulaire (3) a une section creuse.

6. Joint d'étanchéité selon la revendication 4, caractérisé en ce que ladite pièce tubulaire ou multitubulaire (3) a une section pleine.

7. Joint d'étanchéité selon l'une des revendications précédentes, caractérisé en ce que l'élément d'ancrage (1) présente une section transversale en forme de U délimitant intérieurement une rainure (8) dans laquelle est engagé le bord (5) du bâti support (4).

8. Joint d'étanchéité selon l'une des revendications précédentes, caractérisé en ce que ledit élément de liaison (2) présente une forme incurvée dans le sens du pivotement vers l'élément d'ancrage (1).

9. Joint d'étanchéité selon l'une des revendications précédentes, caractérisé en ce que la pièce tubulaire ou multitubulaire déformable (3) est réalisée avec un matériau de résistance mécanique différente de celle de l'élément de liaison

10. Joint d'étanchéité selon l'une des revendications précédentes, caractérisé en ce que ledit élément de liaison (2) est rigidifié au moyen d'une armature (9) éventuellement d'une seule pièce de l'élément d'ancrage (1) à l'élément de liaison (2) pour permettre au joint de rester dans sa position d'étanchéité sans le soutien de la feuillure (11) du bâti support (4).

11. Joint d'étanchéité selon l'une des revendications précédentes, caractérisé en ce que son inclinaison par rapport à l'élément d'ancrage est ajustée par formage mécanique pour l'adapter à divers profils de feuillure

12. Joint d'étanchéité selon l'une des revendications précédentes, caractérisé en ce que l'élément de liaison est réalisé en un matériau élastomère compact ou dense tandis que la pièce tubulaire ou multitubulaire déformable est réalisée en un matériau élastomère spongieux notamment de basse densité.

13. Joint d'étanchéité selon la revendication 12, caractérisé en ce que l'élément de liaison est réalisé avec un matériau de densité est supérieure à 1 et comprise entre 1 et 1,3 tel que par exemple un EPDM.

14. Joint d'étanchéité selon l'une des revendications précédentes, caractérisé en ce que l'axe (7) est situé de l'autre côté du plan médian vertical de la pièce (3) par rapport au point de contact du panneau mobile (6).

## Patentansprüche

1. Dichtungsverbindung zwischen einem tragenden Rahmengestell (4), das einen Befestigungsrand (5) aufweist und einer beweglichen Platte (6), die in Schließstellung sich auf dem Rahmengestell (4) abstützt, mit einem Verankerungselement (1) an dem Rand (5), verbunden mittels eines Verbindungselements (2) mit einem elastischen Dichtungselement (3), das dazu dient, die bewegliche Platte (6) in Andruckberührung aufzunehmen, dadurch gekennzeichnet, daß die Länge des Verbindungselements (2) derart ist, daß es eine Ausfederung des Dichtungselements (3) in dem freien Raum (12) erlaubt, der in Öffnungsstellung der Dichtung zwischen dem äußeren Flansch des Verankerungselements (1) auf dem Rand (5) und der Innenseite des Dichtungselements (3) angeordnet ist, wobei das Dichtungselement (3) auf schwenkbare Weise auf dem Verbindungselement (2) um eine Drehachse (7) angebracht ist, wobei die Schließung der bewegbaren Platte (6) die Ausfederung durch Schwenken des Dichtungselements (3) ohne wesentliche Deformierung des letzteren hervorruft.

2. Dichtungsverbindung nach Anspruch 1, dadurch gekennzeichnet, daß das Dichtungselement (3) ein rohrförmiges oder ein mehrrohriges Teil ist.

3. Dichtungsverbindung nach Anspruch 2, dadurch gekennzeichnet, daß die Länge des Verbindungselements (2) im wesentlichen gleich dem Radius des Querschnitts des rohrförmigen oder mehrrohrigen Teiles (3) ist.

4. Dichtungsverbindung nach Anspruch 2 oder 3, dadurch gekennzeichnet, daß die Gelenklinie (7) auf einer der Mantellinien des rohrförmigen oder mehrrohrigen Stücks (3) angeordnet ist und die Schwenkachse bildet.

5. Dichtungsverbindung nach Ansprch 4, dadurch gekennzeichnet, daß das rohrförmige oder mehrrohrige Stück (3) einen hohlen Abschnitt aufweist.

6. Dichtungsverbindung nach Anspruch 4, dadurch gekennzeichnet, daß das rohrförmige oder mehrrohrige Rohr (3) einen Vollabschnitt aufweist.

7. Dichtungsverbindung nach einem der vorhergehenden Ansprüche, dadurch gekennzeichnet, daß das Verankerungselement (1) einen Querschnitt in Form eines U aufweist, das im Inneren eine Kerbe (8) begrenzt, in der der Rand (5) des Rahmentragegestells (4) eingesetzt ist.

8. Dichtungsverbindung nach einem der vorhergehenden Ansprüche, dadurch gekennzeichnet, daß das Verbindungselement (2) eine gebogene Form in Richtung des Schwenkens zu dem Verankerungselement (1) aufweist.

9. Dichtungsverbindung nach einem der vorhergehenden Ansprüche, dadurch gekennzeichnet, daß das rohrförmige oder mehrrohrige elastische Teil (3) aus einem Material gebildet ist von einem mechanischen Widerstand, der unterschiedlich ist zu jenem des Verbindungselements.

10. Dichtungsverbindung nach einem der vorhergehenden Ansprüche, dadurch gekennzeichnet, daß das Verbindungselement (2) mittels einer Armatur (9) versteift ist, die evtl. aus einem einzigen Teil des Verankerungselements (1) zu dem Verbindungselement (2) besteht, um der Verbindung zu erlauben, in ihrer Dichtstellung ohne die Unterstützung des Falzes (11) des Rahmentragegestells (4) zu verbleiben.

11. Dichtungsverbindung nach einem der vorhergehenden Ansprüche, dadurch gekennzeichnet, daß ihre Neigung bezüglich des Verankerungselements durch mechanische Verformung eingestellt wird, um sie unterschiedlichen Falzprofilen anzupassen.

12. Dichtungsverbindung nach einem der vorhergehenden Ansprüche, dadurch gekennzeichnet, daß das Verbindungselement aus einem elastomeren Material gebildet ist, das kompakt oder dicht ist, während das rohrförmige oder mehrrohrige elastische Teil aus einem elastomeren, schwammigen Material, insbesondere von geringer Dichtheit, gebildet wird.

13. Dichtungsverbindung nach Anspruch 12, dadurch gekennzeichnet, daß das Verbindungselement aus einem Material gebildet ist von einer Dichte, die größer ist als 1 und zwischen 1 und 1,3 liegt, wie beispielsweise ein EPDM.

14. Dichtungsverbindung nach einem der vorhergehenden Ansprüche, dadurch gekennzeichnet, daß die Achse (7) auf der anderen Seite der vertikalen Mittenebene des Teils (3) bezüglich des Berührungspunktes der bewegbaren Platte (6) angeordnet ist.

## Claims

1. Seal between a supporting frame (4) comprising a fixing edge (5) and a movable panel (6) which in the closed position rests on the frame (4), comprising an element (1) for anchoring on the edge (5), connected by means of a connecting element (2) to a deformable sealing element (3) for receiving the movable panel (6) in bearing contact, characterised in that the length of the connecting element (2) is such that it allows movement of the sealing element (3) in the free space (12) situated, in the open position of the seal, between the outer flank of the element (1) for anchoring on the edge (5) and the inner face of the sealing element (3), said sealing element (3) being mounted on said connecting element (2) for pivoting about a hinge axis (7), closure of the movable panel (6) causing movement by pivoting of the sealing element (3) without appreciable deformation of the latter.

2. Seal according to claim 1, characterised in that the sealing element (3) is a tubular or multitubular component.

3. Seal according to claim 2, characterised in that the length of the connecting element (2) is approximately equal to the cross-sectional radius of said tubular or multitubular component (3).

4. Seal according to either of claims 2 or 3, characterised in that said hinge line (7) is situated on one of the generatrices of said tubular or multitubular component (3) and constitutes the pivot axis.

5. Seal according to claim 4, characterised in that said tubular or multitubular component (3) has a hollow section.

6. Seal according to claim 4, characterised in that said tubular or multitubular component (3) has a solid section.

7. Seal according to any of the preceding claims, characterised in that the anchoring element (1) has a U-shaped cross-section internally defining a groove (8) in which is engaged the edge (5) of the supporting frame (4).

8. Seal according to any of the preceding claims, characterised in that said connecting element (2) has a shape curved in the direction of pivoting towards the anchoring element (1).

9. Seal according to any of the preceding claims, characterised in that the deformable tubular or multitubular component (3) is made of a material with a strength different to that of said connecting element.

10. Seal according to any of the preceding claims, characterised in that said connecting element (2) is stiffened by means of a reinforcement (9) which may be in one piece with the anchoring element (1) to the connecting element (2) in order to allow the seal to remain in its sealing position without the support of the rebate (11) of the supporting frame (4).

11. Seal according to any of the preceding claims, characterised in that its inclination relative to the anchoring element is adjusted by mechanical shaping in order to adapt it to various rebate profiles.

12. Seal according to any of the preceding claims, characterised in that the connecting element is made of a compact or dense elastomeric material while the deformable tubular or multitubular component is made of a porous elastomeric material, particularly one of low density.

13. Seal according to claim 12, characterised in that the connecting element is made of a material with a density greater than 1 and comprising between 1 and 1.3, such as for example an EPDM.

14. Seal according to any of the preceding claims, characterised in that the axis (7) is situated on the other side of the vertical centre plane of the component (3) in relation to the point of contact of the movable panel (6).

Fig-1

Fig-2

Fig-3

Fig. 4